# FASCICULE DE BREVET EUROPEEN

(11) **EP 2 102 935 B1**
(45) Date de publication et mention de la délivrance du brevet: **09.07.2014**
(21) Numéro de dépôt: 07858001.6
(22) Date de dépôt: 20.12.2007
(51) Int. Cl.: H01M 10/54, B02C 23/10, B03B 9/06, H01M 6/52

(54) **DISPOSITIF ET PROCÉDÉ DE TRAITEMENT D'ACCUMULATEURS AU PLOMB NON CONCASSÉS**
VERFAHREN UND EINRICHTUNG ZUM VERARBEITEN VON NICHT-BLEIMEHL-AKKUMULATOREN
METHOD AND DEVICE FOR PROCESSING NON CRUSHED LEAD ACCUMULATORS

(30) Priorité: 22.12.2006 FR 0611311
(43) Date de publication de la demande: 23.09.2009
(73) Titulaire: Recylex S.A., 75008 Paris (FR)
(72) Inventeur: HUCHARD, Jean-François, 01600 Parcieux (FR)
(74) Mandataire: Regimbeau
(86) Numéro de dépôt international: PCT/EP2007/064382
(87) Numéro de publication internationale: WO 2008/077901

(56) Documents cités:
- WO-A-02/22348
- DE-A1- 4 407 768

## Description

L'invention concerne le domaine technique général du traitement des accumulateurs au plomb, de type batterie plomb acide.

L'invention trouve avantageusement mais non limitativement application dans le domaine du recyclage des batteries usagées au plomb.

### PRESENTATION GENERALE DE L'ART ANTERIEUR

Il a déjà été proposé des dispositifs et des procédés permettant de traiter des accumulateurs au Plomb.

Dans les années 1960, les accumulateurs au Plomb étaient dans des boîtes en ébonite ou bakélite.

Les procédés de traitement de l'époque, tel que celui décrit dans le document FR 39 762, étaient particulièrement adaptés au traitement de ce type d'accumulateurs.

En particulier, ce type de procédé comprenait une étape consistant à briser les accumulateurs en les faisant tomber d'une hauteur comprise entre 3 et 4 mètres.

Dans les années 1970, l'arrivée des accumulateurs au Plomb avec boîtier en polypropylène a rendu ce type de procédé obsolète.

En effet, le polypropylène est un matériau beaucoup moins cassant que l'ébonite ou la bakélite, de sorte que l'étape consistant à briser les accumulateurs est devenue inefficace.

Dans les années 1990, les normes de traitement ont en outre imposées que les accumulateurs au plomb soient traités dans leur état rempli d'électrolyte, c'est-à-dire dans leur état usagé, sans prétraitement particulier visant à vider les accumulateurs de leur électrolyte.

Il a alors été proposé une multitude de procédés de traitement comprenant généralement une étape de concassage fin des accumulateurs, de criblage des débris de concassage pour séparer les débris de dimensions inférieures à 80 millimètres de ceux de dimensions supérieures, et une étape de séparation pour séparer les uns des autres :
- les oxydes et sulfates de plomb et acides,
- le métal,
- le polypropylène, et
- les autres plastiques.

Un but de l'invention est de proposer un procédé et un dispositif de traitement d'accumulateurs au plomb plus simple et à un meilleur coût que les procédés de l'art antérieur.

Un autre but de l'invention est de proposer un procédé et un dispositif présentant une bonne qualité de traitement, c'est-à-dire dont les produits séparés présentent un pourcentage d'impureté très faible (Polypropylène pur à 99,9 %, Fraction métal : 90 % de plomb contenu minimum, Oxydes et sulfates : 3% de matières organiques contenues maximum).

### PRESENTATION DE L'INVENTION

A cet effet, on prévoit un dispositif de traitement d'accumulateurs au plomb non concassés comprenant en combinaison :
- un broyeur pour concasser des accumulateurs de sorte à obtenir des débris de concassage,
- un dispositif de tri disposé en aval du broyeur, le dispositif de tri comprenant une cuve dans laquelle est disposée une vis hélicoïdale, la cuve comprenant des ouvertures de dimensions comprise entre 2 et 6 millimètres de sorte à séparer les débris grossiers des substances fines.

On entend, dans le cadre de la présente invention, par « débris grossier », un débris de dimensions supérieures aux dimensions des ouvertures de la cuve.

On entend, dans le cadre de la présente invention, par « substance fine », un débris de dimensions inférieures aux dimensions des ouvertures de la cuve.

Des aspects préférés mais non limitatifs du dispositif selon l'invention sont les suivants :
- les dimensions des ouvertures de la cuve sont préférentiellement comprises entre 3 et 5 millimètres, et encore plus préférentiellement égales à 4 millimètres ;
- le broyeur est agencé de sorte à concasser les accumulateurs en débris de concassage de dimensions inférieures ou égales à 50 millimètres ;
- le dispositif comprend en outre un deuxième dispositif de tri disposé de manière à récupérer les substances fines issues du premier dispositif de tri ;
- la cuve du deuxième dispositif de tri comprend des ouvertures de dimensions comprises entre 0,2 et 1 millimètre, et préférentiellement de l'ordre de 0,5 millimètre de sorte à séparer les fragments métalliques des autres substances fines ;
- le dispositif comprend en outre un extracteur à racloirs en amont du broyeur ;
- le dispositif comprend en outre un convoyeur à bande disposé entre l'extracteur à racloirs et le broyeur, le convoyeur comprenant au moins une raclette de nettoyage pour nettoyer la bande du convoyeur ;
- le dispositif comprend en outre des moyens pour récupérer les débris décrochés de la bande du convoyeur par la raclette de nettoyage ;
- le dispositif comprend en outre un séparateur dynamique disposé en aval du premier dispositif de tri de manière à récupérer les débris grossiers, le séparateur dynamique permettant de séparer les matières métalliques des matières plastiques ;
- le dispositif comprend en outre un séparateur statique disposé en aval du séparateur dynamique de manière à récupérer les matières plastiques, le séparateur permettant de séparer les matières plastiques en polypropylène des autres matières plastiques.

L'invention concerne également un procédé de traitement d'accumulateurs au plomb non concassés comprenant en combinaison :
- le concassage grossier des accumulateurs au moyen d'un broyeur de sorte à obtenir des débris de concassage,
- le tri des débris de concassage au moyen d'un dispositif de tri comprenant une cuve dans laquelle est disposée une vis hélicoïdale, la cuve comprenant des ouvertures de dimensions comprise entre 2 et 6 millimètres de sorte à séparer les débris grossiers des substances fines.

L'invention concerne également des débris de concassage obtenu par le procédé décrit ci-dessus.

### PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :
- la figure 1 est une représentation schématique d'un mode de réalisation du dispositif selon l'invention,
- la figure 2 illustre un mode de réalisation du procédé selon l'invention.

### DESCRIPTION DE L'INVENTION

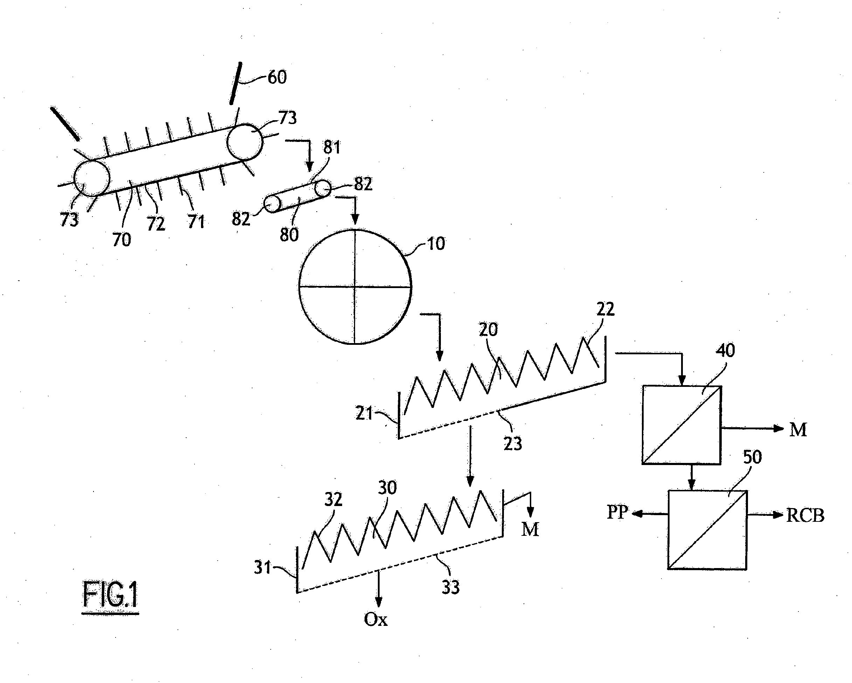

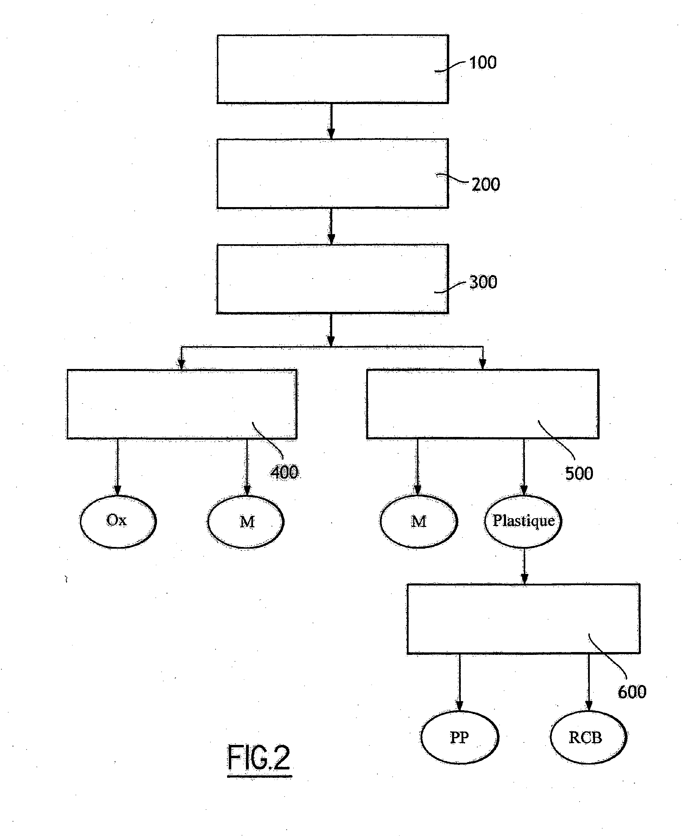

Le dispositif et le procédé de traitement d'accumulateurs au plomb non concassés selon l'invention vont maintenant être décrits en référence aux figures 1 et 2.

En référence à la figure 1, le dispositif selon l'invention comprend :
- un broyeur 10,
- un dispositif de tri 20.

Le broyeur 10 est par exemple un broyeur à marteaux. Dans le mode de réalisation illustré à la figure 1, le broyeur 10 comprend 26 marteaux articulés sur rotor sur lesquels les accumulateurs sont concassés en débris de concassage.

Dans un mode de réalisation, le broyeur 10 est agencé de manière à produire des débris de concassage de dimensions inférieures à 50 millimètres. Par exemple, dans une variante de réalisation, cet agencement comprend la mise en place d'un tamis de maille égale à 50 millimètres en sortie du broyeur, de sorte que seul les débris de dimensions inférieures à 50 millimètres sortent du broyeur 10.

Bien entendu, l'homme de l'art sait que d'autres paramètres comme la distance entre les marteaux articulés et la grille, ou la forme et les dimensions de l'enceinte du broyeur 10 contenant les marteaux peuvent être pris en compte pour améliorer les performances du concassage des accumulateurs en débris de dimensions inférieures à 50 millimètres.

Dans le mode de réalisation illustré à la figure 1, le broyeur 10 est adapté au concassage d'accumulateurs de type batterie de véhicule, en débris de dimensions inférieures ou égales à 50 millimètres. Le concassage en débris de dimensions inférieures ou égales à 50 millimètres permet de faciliter le tri ultérieur des constituants desdits accumulateurs.

Le dispositif de tri 20 comprend une cuve 21 dans laquelle est disposée une vis hélicoïdale 22.

Une portion (ou toute la surface) de la paroi de la cuve 21 est formée d'une grille 23.

Les perforations de la grille peuvent, par exemple, être de forme circulaire, et présentent une maille (ou diamètre dans le cas d'ouvertures circulaires) de 4 millimètres pour trier les débris de concassage issus du broyeur 10 selon leur taille.

En variante, les ouvertures de la paroi de la cuve peuvent être d'une autre forme (carré, rectangulaire, hexagonale, etc.).

Le dispositif de tri 20 à vis hélicoïdale (autrement qualifié de « vis laveuse » dans la technique) permet de séparer les débris grossiers des substances fines.

On entend, dans le cadre de la présente invention, par « débris grossiers », des débris dont les dimensions sont supérieures à la maille des ouvertures du dispositif de triage 20.

On entend, dans le cadre de la présente invention, par « substances fines » les liquides et les fragments de dimensions inférieures à la maille des ouvertures du dispositif de triage 20.

Les débris grossiers de concassage comprennent la majorité des matières plastiques et métalliques constituant l'accumulateur.

Les substances fines comprennent d'une part les oxydes et sulfates de plomb (PbO2, PbSO4) et d'autre part les fragments de matière métallique de dimensions inférieures ou égales à la maille des ouvertures du dispositif de triage 20.

Le dispositif de tri 20 à vis hélicoïdale est particulièrement adapté au tri de débris de concassage à un débit de 20 tonnes/heure. Il permet un tri de bonne qualité des débris de concassage à un coût réduit.

Le dispositif comprend en outre un deuxième dispositif de tri 30 disposé de manière à recueillir les substances fines issues du premier dispositif de tri 20.

Dans l'exemple illustré à la figure 1, le deuxième dispositif de tri 30 est disposé sous le premier dispositif de tri 20.

Le deuxième dispositif de tri 30 comprend les mêmes éléments que le premier dispositif de tri 20. En particulier, le deuxième dispositif de tri 30 comprend une cuve 31 dans laquelle est disposée une vis hélicoïdale 32.

Au moins une portion des parois de la cuve 31 comprend une grille 33 à perforations circulaires de maille comprise entre 0,2 et 1 millimètre, et préférentiellement égale à 0,5 millimètre.

Dans des variantes de réalisation, les perforations de la grille 33 présentent une autre forme (carrée, rectangulaire, hexagonale, etc.).

Le deuxième dispositif de tri 30 permet de séparer les fragments de dimensions supérieures à la maille des ouvertures de la grille des autres substances fines.

Les fragments de dimensions supérieures à la maille des ouvertures du deuxième dispositif de triage 30 sont en majorité constituées de matières métalliques.

Les autres substances fines sont en majorité constituées des oxydes de plomb et sulfates de plomb (PbO2, PbSO4) et des acides contenus dans les accumulateurs.

La combinaison des deux dispositifs de tri selon l'invention permet d'améliorer encore la qualité du traitement.

Elle permet notamment de récupérer une plus grande quantité de matières métalliques que les dispositifs de l'art antérieur. Elle permet également d'améliorer la pureté des oxydes de plomb obtenus en sortie du deuxième dispositif de triage 30.

Le dispositif peut également comprendre un séparateur dynamique 40 et/ou un séparateur statique 50.

Le séparateur dynamique 40 est disposé en aval du premier dispositif de tri 20 de manière à recevoir les débris grossiers issus du premier dispositif de triage 20.

Le séparateur dynamique 40 permet de trier les débris grossiers en séparant les matières métalliques et les matières plastiques.

Le séparateur dynamique 40 est par exemple un séparateur à vis hélicoïdale.

Le séparateur statique 50 est disposé en aval du séparateur dynamique 40.

Le séparateur statique 50 permet de trier les matières plastiques en séparant les matières plastiques en polypropylène des autres matières plastiques non recyclables appelées dans la suite RCB (Rebus de Concassage de Batteries).

Le séparateur statique 50 comprend par exemple un bac rempli d'eau utilisant la gravité pour séparer les matières plastiques en polypropylène des RCB.

En effet, la densité du polypropylène est inférieure à celle de l'eau, contrairement aux RCB, de sorte que les matières plastiques en polypropylène flottent alors que les RCB coulent au fond du récipient. Ceci permet de séparer aisément les matières plastiques en polypropylène des RCB.

Optionnellement, le dispositif peut comprendre une vis de lavage (non représentée) disposée entre le premier dispositif de tri 20 et le séparateur dynamique 40.

Cette vis de lavage permet de détacher le plomb adhérant aux matières plastiques et métalliques, de sorte à obtenir des matières plastiques et métalliques très propres facilement recyclables de par leur faible pourcentage d'impureté.

Le dispositif illustré à la figure 1 comprend également une trémie 60 dans laquelle sont disposés les accumulateurs à traiter, et un extracteur à racloirs 70.

L'extracteur à racloirs 70 comprend des racloirs 71. Chaque racloir 71 est constitué d'une plaque métallique rectangulaire. Les extrémités de chaque racloir 71 sont fixées à des chaînes 72 sans fin qui s'enroulent sur deux tambours 73 disposés, à l'extrémité du logement 60.

Chaîne 72 et racloirs 71 sont noyés dans la matière (accumulateurs) et l'entraînent sur le fond plat de la trémie.

L'extracteur à racloirs 70 permet d'alimenter en continue et à un débit régulier le broyeur 10 par l'intermédiaire d'un convoyeur 80.

Le convoyeur 80 est par exemple constitué d'une bande 81 disposée entre deux tambours 82 en rotation.

Avantageusement, le convoyeur 80 peut comprendre des moyens (non représentés) pour dégager les débris attachés à la bande 81 de sorte à nettoyer la surface de la bande 81.

En effet, à un débit de 20 tonnes heures, l'absence de système de nettoyage de la bande 81 du convoyeur 80 peut entraîner une agglomération importante de débris sur la surface de celle-ci.

Les moyens de dégagement des débris peuvent comprendre des raclettes (ou plaques rectangulaires) disposées sous le convoyeur 80 et en contact avec la surface de la bande 81 de manière à décrocher les débris par raclage.

Le dispositif peut également comprendre une goulotte (non représentée) comprenant une vis hélicoïdale.

Dans ce cas, le réservoir est disposé sous le convoyeur 80 pour récupérer les débris détachés par les moyens de dégagement.

La vis hélicoïdale permet le transport des débris récupérés dans la goulotte vers l'entrée du broyeur 10 (ou la sortie du broyeur 10 suivant le mode de réalisation du dispositif).

Le principe de fonctionnement du dispositif décrit ci-dessus est le suivant.

Les accumulateurs usagés sont disposés dans la trémie 60.

L'extracteur à racloirs 70, disposé au fond de la trémie 60 entraîne les accumulateurs usagés de manière à alimenter le convoyeur 80 à un débit régulier de 20 tonnes par heure.

Le convoyeur 80 transporte les accumulateurs usagés jusqu'au broyeur 10 disposé à l'extrémité du convoyeur 80.

Les raclettes décrochent les débris attachés à la surface de la bande 81 du convoyeur 80.

Les débris décrochés par raclage tombe dans la goulotte et sont entraînés par la vis hélicoïdale vers l'entrée du broyeur 10. Ainsi, les pertes en matériau sont limitées.

Le broyeur 10 concasse les accumulateurs de sorte à obtenir des débris de dimensions comprises entre 0 et 50 millimètres.

Les débris obtenus en sortie du broyeur 10 sont amenés dans le premier dispositif de tri 20 qui les trie selon leur taille.

Les substances fines de dimensions inférieures à la maille des ouvertures du premier dispositif de tri 20 (4 millimètres dans le mode de réalisation illustré à la figure 1) sont séparées des débris grossiers de dimensions supérieures à la maille des ouvertures du premier dispositif de tri 20 (supérieur à 4 millimètres dans l'exemple illustré à la figure 1).

Les substances fines, sont récupérées dans le deuxième dispositif de tri 30 qui les trie selon leur taille.

Les fragments de dimensions supérieures à la maille des ouvertures du deuxième dispositif de tri 30 (0,5 millimètre dans l'exemple de la figure 1) sont séparés des autres substances de dimensions inférieures ou égales à la maille des ouvertures du deuxième dispositif de tri 30.

Les fragments de dimensions supérieures à la maille des ouvertures du deuxième dispositif de tri 30 sont constitués de matières métalliques.

Les autres substances fines sont constituées des oxydes de Plomb (PbO2, PbSO4) et des acides contenus dans les accumulateurs. Un avantage du dispositif selon l'invention est qu'il permet de récupérer des oxydes et acides sous une forme dite « pompable » (i.e liquide, semi-liquide, ou pâteuse). Ces oxydes et acides sont ensuite traités par un procédé de séchage (ou « dewatering » selon le terme anglo-saxon) connu de l'homme de l'art.

Les débris grossiers sont récupérés dans le séparateur dynamique 40. Le séparateur dynamique 40 sépare les débris en fonction de la matière les constituant. En particulier, les matières plastiques sont séparées des matières métalliques.

Les matières plastiques sont ensuite reçues dans le séparateur statique 50 qui permet de séparer les matières plastiques en polypropylène des autres matières plastiques non recyclables RCB.

Un exemple de mise en oeuvre de l'invention va maintenant être décrit en référence au procédé illustré à la figure 2.

Le dispositif est alimenté (étape 100) en accumulateurs à un débit de 20 tonnes d'accumulateurs par heure.

Le procédé comprend une étape de concassage 200 des accumulateurs au moyen du broyeur 10 pour obtenir des débris de concassage.

Après l'étape de concassage 200 des accumulateurs, le procédé comprend une première étape de tri 300 des débris de concassage au moyen du premier dispositif de tri 20 disposé en aval du broyeur 10.

Cette étape de tri 300 permet de séparer les débris grossiers des substances fines.

Les substances fines représentent environ 62% des accumulateurs. Ainsi, pour 20 tonnes d'accumulateurs traitées, la quantité de substance fine est de 12,4 tonnes, et la quantité de débris grossiers est de 5,6 tonnes.

Dans une autre étape 400 du procédé, les substances fines sont triées en fonction de leur taille : les fragments de dimensions supérieures à 0,5 millimètre sont séparés des autres substances fines au moyen du deuxième dispositif de triage 30.

Ces fragments de dimensions supérieures à la maille des ouvertures du deuxième dispositif de tri 30 représentent environ 2,5% de la masse des accumulateurs. Ainsi, pour 20 tonnes d'accumulateurs traitées, la quantité de matières métalliques de dimensions comprises entre 0,5 et 4 millimètres (i.e. comprises entre les mailles des ouvertures des premier et deuxième dispositifs de tri 20, 30) est de 0,5 tonne.

Dans une autre étape 500 du procédé, les débris grossiers qui représentent 30% de la masse des accumulateurs) sont séparés en fonction de la matière les constituant en utilisant le séparateur dynamique 40 : les matières plastiques sont séparées des matières métalliques.

Les matières métalliques représentent 20% de la masse des accumulateurs. Ainsi, pour 20 tonnes d'accumulateurs traitées, la quantité de matières métalliques de dimensions supérieure à 4 millimètres est de 4 tonnes.

Le lecteur appréciera que les deux étapes 400, 500 précédentes peuvent être réalisées séquentiellement ou en parallèle pour augmenter la vitesse du traitement.

Dans une autre étape 600 du procédé, les matières plastiques (qui représentent 8% de la masse des accumulateurs) sont séparées en fonction du type de plastique les constituant : les matières plastiques en polypropylène sont séparées des autres matières plastiques RCB.

Les matières plastiques en polypropylène représentent environ 4% de la masse d'accumulateurs traités. On obtient donc une quantité de 0,8 tonne de matières plastiques polypropylène pour 20 tonnes d'accumulateurs traités en sortie de l'étape de séparation statique.

### REFERENCES

100 Extraction et convoyage des accumulateurs usagers remplis d'électrolyte.
200 Concassage grossier des accumulateurs au moyen d'un broyeur pour obtenir des débris grossiers de concassage.
300 Première étape de tri des débris de concassage au moyen d'un premier dispositif de tri disposé en aval du broyeur.
400 Deuxième étape de tri correspondant au tri des substances fines au moyen d'un deuxième dispositif de tri disposé en aval du premier dispositif de tri.
500 Séparation dynamique des débris grossiers en fonction de leur taille.
600 Séparation statique des matières plastiques.

## Revendications

1. Dispositif de traitement d'accumulateurs au plomb non concassés comprenant en combinaison :
- un broyeur (10) pour concasser des accumulateurs de sorte à obtenir des débris de concassage,
- un dispositif de tri (20) disposé en aval du broyeur (10), le dispositif de tri (20) comprenant une cuve (21) dans laquelle est disposée une vis hélicoïdale (22), la paroi de la cuve (21) comprenant des ouvertures (23) de dimensions comprise entre 2 et 6 millimètres de sorte à séparer les débris grossiers des substances fines.

2. Dispositif selon la revendication 1, **caractérisé en ce que** les dimensions des ouvertures de la cuve sont préférentiellement comprises entre 3 et 5 millimètres, et encore plus préférentiellement égales à 4 millimètres.

3. Dispositif selon l'une des revendications 1 ou 2, **caractérisé en ce que** le broyeur (10) est agencé de sorte à concasser les accumulateurs en débris de concassage de dimensions inférieures ou égales à 50 millimètres.

4. Dispositif selon l'une des revendications 1 à 3, **caractérisé en ce qu'**il comprend en outre un deuxième dispositif de tri (30) disposé de manière à récupérer les substances fines Issues du premier dispositif de tri (20).

5. Dispositif selon la revendication 4, **caractérisé en ce que** la cuve (31) du deuxième dispositif de tri (30) comprend des ouvertures (33) de dimensions comprises entre 0,2 et 1 millimètre, et préférentiellement de l'ordre de 0,5 millimètres.

6. Dispositif selon l'une des revendications 1 à 5, **caractérisé en ce qu'**il comprend en outre un extracteur à racloirs (70) en amont du broyeur (10).

7. Dispositif selon la revendication 6, **caractérisé en ce qu'**il comprend en outre un convoyeur à bande (80) disposé entre l'extracteur à racloirs (70) et le broyeur (10), le convoyeur (80) comprenant au moins une raclette de nettoyage de courroie pour nettoyer la bande (81) du convoyeur (80).

8. Dispositif selon la revendication 7, **caractérisé en ce qu'**il comprend en outre des moyens pour récupérer les débris décrochés de la bande (81) du convoyeur (80) par la raclette de nettoyage.

9. Dispositif selon l'une des revendications 1 à 8, **caractérisé en ce qu'**il comprend en outre un séparateur dynamique (40) disposé en aval du premier dispositif de tri (20) de manière à récupérer les débris grossiers, le séparateur dynamique (40) permettant de séparer les matières métalliques des matières plastiques.

10. Dispositif selon la revendication 9, **caractérisé en ce qu'**il comprend en outre un séparateur statique (50) disposé en aval du séparateur dynamique (40) de manière à récupérer les matières plastiques, le séparateur statique (50) permettant de séparer les matières plastiques en polypropylène des autres matières plastiques.

11. Procédé de traitement d'accumulateurs au plomb non concassés **caractérisé en ce qu'**il comprend en combinaison :
- le concassage grossier (200) des accumulateurs au moyen d'un broyeur de sorte à obtenir des débris de concassage,
- le tri (300) des débris de concassage au moyen d'un dispositif de tri comprenant une cuve dans laquelle est disposée une vis hélicoïdale, la cuve comprenant des ouvertures de dimensions comprise entre 2 et 6 millimètres de sorte à séparer les débris grossiers des substances fines.

## Patentansprüche

1. Einrichtung zur Wiederaufarbeitung von nicht zerkleinerten Blei-Akkumulatoren, die in Kombination aufweist:
- einen Zerkleinerer (10) zum Zerkleinern von Akkumulatoren, so dass zerkleinerte Bruchstücke erhalten werden,
- eine Sortiervorrichtung (20), die dem Zerkleinerer (10) nachgelagert ist, wobei die Sortiervorrichtung (20) eine Wanne (21) enthält, in welcher eine Schnecke (22) angeordnet ist, wobei die Wand der Wanne (21) Öffnungen (23) mit Abmessungen zwischen 2 und 6 mm aufweist, so dass gröbere Bruchstücke von feineren Stoffen getrennt werden.

2. Einrichtung nach Anspruch 1, **dadurch gekennzeichnet, dass** die Abmessungen der Öffnungen der Wanne vorzugsweise zwischen 3 und 5 mm, noch bevorzugter gleich 4 mm sind.

3. Einrichtung nach einem der Ansprüche 1 oder 2, **dadurch gekennzeichnet, dass** der Zerkleinerer (10) so angeordnet ist, dass die Akkumulatoren in zerkleinerte Bruchstücke mit Abmessungen kleiner oder gleich 50 mm zerkleinert werden.

4. Einrichtung nach einem der Ansprüche 1 bis 3, **dadurch gekennzeichnet, dass** sie ferner eine zweite Sortiervorrichtung (30) aufweist, die so angeordnet ist, dass sie die aus der ersten Sortiervorrichtung (20) stammenden feineren Stoffe rückgewinnt.

5. Einrichtung nach Anspruch 4, **dadurch gekennzeichnet, dass** die Wanne (31) der zweiten Sortiervorrichtung (30) Öffnungen (33) mit Abmessungen zwischen 0,2 und 1 mm, bevorzugt in der Größenordnung von 0,5 mm aufweist.

6. Einrichtung nach einem der Ansprüche 1 bis 5, **dadurch gekennzeichnet, dass** sie ferner dem Zerkleinerer (10) vorgelagert einen Kratzeraufgeber (70) aufweist.

7. Einrichtung nach Anspruch 6, **dadurch gekennzeichnet, dass** sie ferner einen Bandförderer (80) aufweist, der zwischen dem Kratzeraufgeber (70) und dem Zerkleinerer (10) angeordnet ist, wobei der Förderer (80) zumindest einen Riemenabstreifer zum Reinigen des Bandes (81) des Förderers (80) aufweist.

8. Einrichtung nach Anspruch 7, **dadurch gekennzeichnet, dass** sie ferner Mittel zur Rückgewinnung von Bruchstücken aufweist, die mittels des Abstreifers von dem Band (81) des Förderers (80) gelöst wurden.

9. Einrichtung nach einem der Ansprüche 1 bis 8, **dadurch gekennzeichnet, dass** sie ferner einen dynamischen Separator (40) aufweist, welcher der ersten Sortiervorrichtung (20) nachgelagert ist, so dass gröbere Bruchstücke rückgewonnen werden, wobei der dynamische Separator (40) es gestattet, metallische Materialien von Kunststoffmaterialien zu trennen.

10. Einrichtung nach Anspruch 9, **dadurch gekennzeichnet, dass** sie ferner einen statischen Separator (50) aufweist, welcher dem dynamischen Separator (40) nachgelagert ist, so dass Kunststoffmaterialien rückgewonnen werden, wobei der statische Separator (50) es gestattet, Kunststoffmaterialien aus Polypropylen von anderen Kunststoffmaterialien zu trennen.

11. Verfahren zur Wiederaufarbeitung von nicht zerkleinerten Blei-Akkumulatoren, **dadurch gekennzeichnet, dass** es in Kombination aufweist:
- grobes Zerkleinern (200) von Akkumulatoren mittels eines Zerkleinerers, so dass zerkleinerte Bruchstücke erhalten werden,
- Sortieren (300) der zerkleinerten Bruchstücke mittels einer Sortiervorrichtung, die eine Wanne enthält, in welcher eine Schnecke angeordnet ist, wobei die Wanne Öffnungen mit Abmessungen zwischen 2 und 6 mm aufweist, so dass gröbere Bruchstücke von feineren Stoffen getrennt werden.

## Claims

1. Device for processing non-crushed lead accumulators comprising in combination:
- a crusher (10) for crushing accumulators in order to obtain crushed rubble,
- a sorting device (20) arranged downstream of the crusher (10), with the sorting device (20) comprising a vat (21) wherein a helical screw is arranged (22), with the wall of the vat (21) comprising openings (23) with dimensions between 2 and 6 millimetres in such a way as to separate gross rubble from fine substances.

2. Device according to claim 1, **characterised in that** the dimensions of the openings of the vat are preferably between 3 and 5 millimetres, and more preferably equal to 4 millimetres.

3. Device according to one of claims 1 or 2, **characterised in that** the crusher (10) is arranged in order to crush the accumulators into crushed rubble with dimensions less than or equal to 50 millimetres.

4. Device according to one of claims 1 to 3, **characterised in that** it further comprises a second sorting device (30) arranged in such a way as to recover the fine substances coming from the first sorting device (20).

5. Device according to claim 4, **characterised in that** the vat (31) of the second sorting device (30) comprises openings (33) with dimensions between 0.2 and 1 millimetre, and preferably of a magnitude of 0.5 millimetres.

6. Device according to one of claims 1 to 5, **characterised in that** it further comprises a scraper extractor (70) upstream of the crusher (10).

7. Device according to claim 6, **characterised in that** it further comprises a belt conveyor (80) arranged between the scraper extractor (70) and the crusher (10), with the conveyor (80) comprising at least one belt cleaning scraper for cleaning the belt (81) of the conveyor (80).

8. Device according to claim 7, **characterised in that** it further comprises means for recovering the rubble dislodged from the belt (81) of the conveyor (80) by the cleaning scraper.

9. Device according to one of claims 1 to 8, **characterised in that** it further comprises a dynamic separator (40) arranged downstream of the first sorting device (20) in such a way as to recover the gross rubble, with the dynamic separator (40) making it possible to separate the metal materials from plastic materials.

10. Device according to claim 9, **characterised in that** it further comprises a static separator (50) arranged downstream of the dynamic separator (40) in such a way as to recover the plastic materials, with the static separator (50) making it possible to separate plastic materials made of polypropylene from the other plastic materials.

11. Method for processing non-crushed lead accumulators **characterised in that** it comprises in combination:
- the gross crushing (200) of the accumulators by means of a crusher in order to obtain crushed rubble,
- the sorting (300) of the crushed rubble by means of a sorting device comprising a vat wherein a helical screw is arranged, with the vat comprising openings with dimensions between 2 and 6 millimetres in such a way as to separate the gross rubble from the fine substances.
